Europäisches Patentamt

European Patent Office

Office européen des brevets

(11) Veröffentlichungsnummer: **0 149 831**
**A2**

(12) # EUROPÄISCHE PATENTANMELDUNG

(21) Anmeldenummer: **84115888.4**

(22) Anmeldetag: **20.12.84**

(51) Int. Cl.⁴: **B 01 D 3/00**

(30) Priorität: **20.01.84 DE 3401830**

(43) Veröffentlichungstag der Anmeldung:
**31.07.85 Patentblatt 85/31**

(84) Benannte Vertragsstaaten:
**BE DE FR GB IT NL**

(71) Anmelder: **Union Rheinische Braunkohlen Kraftstoff**
**Aktiengesellschaft**
**Ludwigshafener Strasse o. Nr. Postfach 8**
**D-5047 Wesseling(DE)**

(72) Erfinder: **Lührs, Armin, Dipl.-Ing.**
**Weidenbachweg 18**
**D-5303 Bornheim 3(DE)**

(54) **Verfahren zur Energieeinsparung in Destillationskolonnen.**

(57) Die Erfindung betrifft ein Verfahren, um aus experimentell leicht meßbaren Daten das Wärmerückgewinnungspotential von Destillationskolonnen zu ermitteln, unter Verringerung des Wärmeverbrauchs der Destillation.

FIG 1.

EP 0 149 831 A2

## Verfahren zur Energieeinsparung in Destillationskolonnen

Die Erfindung betrifft ein Verfahren um aus experimentell leicht meßbaren Daten das Wärmerückgewinnungspotential von Destillationskolonnen zu ermitteln, unter Verringung des Wärmeverbrauchs der Destillation.

Die stark angestiegenen Energiepreise haben zu umfangreichen Aktivitäten zur Energieeinsparung in Destillationskolonnen geführt, wie aus folgendem Stand der Technik hervorgeht:

C.J. Ryskamp, H.L. Wade und R.B. Britton in Hydrocarbon Processing, Mai 1976, Seite 81; L.D. van Horn und R.P. Latour, Instrumentation Technology, Nov. 1976, S. 33; H.L. Wade und C.J. Ryskamp, Hydrocarbon Processing, Nov. 1977, S. 281; L.D. van Horn, Hydrocarbon Processing, April 1980, S. 145 und R. Rinne, H. Sunell, P.R. Latour und K.K. Paynter in Hydrocarbon Processing, März 1982, S. 141.

Dem geschilderten Stand der Technik ist gemeinsam, daß bestimmte Daten, welche die Energie- und Materialflüsse in den Destillationskolonnen betreffen, herausgegriffen werden, wobei unterschiedliche Bewertungen der auszuwählenden Daten vorgenommen werden. Die gewählten Meßdaten werden dann in Computer-Systemen ausgewertet und zur Steuerung der Fahrweise der Destillationskolonne verwendet.

Es ist dem Fachmann bekannt, daß die Kenntnis der durch Destillationsböden aufsteigenden Dampfmengen V und der durch sie nach unten abfließenden Flüssigkeitsmengen L für die gewünschte optimale Fahrweise einer Destillationskolonne von ausschlaggebender Bedeutung ist.

Bekannte Gleichungen zur Ermittlung dieser Größen sind folgende:

1. $V = \Sigma m_i + m_{Kopfgas} + m_{Prozeßwasser} + L$

Die aufsteigende Dampfmenge V entspricht der Summe der an den Seitenabzügen der Kolonne abgezogenen Mengen bestimmter Fraktionen $m_i$ oberhalb eines Abzugsbodens (i = 1....n); der über Kopf der Destillationskolonne strömenden Menge $m_{Kopfgas}$, der gegebenenfalls über Kopf anfallenden Prozeßwassermenge $m_{Prozeßwasser}$ sowie der in der Destillationskolonne nach unten fließenden Flüssigkeitsmenge L.

Die Größen $m_i$, $m_{Kopfgas}$ und $m_{Prozeßwasser}$ sind leicht meßbar, nicht dagegen die Größen V und L.

Zur Ermittlung von V und L dient eine 2. Gleichung:

2. $V \times h_V = \Sigma m_i h_i + m_{Kopfgas} \times h_{Kopfgas} + m_{H_2O} \times h_{H_2O} + L \times h_L + \Sigma Q_j + Q_{Kond.} - \Sigma Q_K + m_{Prozeßwasser} \times h_{Prozeßwasser}$

h bedeutet in dieser Gleichung die jeweilige spezifische Enthalpie. Als zusätzlich zu bestimmende Glieder der Gleichung 2 treten bei Vorliegen von Seitenumläufen die in diesen Umläufen abgeführten Wärmemengen $Q_j$ (j = 1·····m)
auf sowie die Kondensationswärme im Kopfkondensator $Q_{Kond.}$ und
die Wärmezufuhr durch gegebenenfalls vorhandene Seitenstripper
(Reboiler) $Q_K$, (K = 1····1).

Sind die Parameter $m_i$, $m_{Kopfgas}$, $m_{Prozeßwasser}$, $h_i$ (i = 1····n),
$h_{Kopfgas}$, $h_{Prozeßwasser}$, $h_L$, $h_V$, $Q_j$, $Q_{Kond.}$ und $Q_K$ bekannt, so
lassen sich V und L am jeweiliegen Boden errechnen.

Während die Parameter $h_i$, $h_{Kopfgas}$, $h_{Prozeßwasser}$, $Q_j$, $Q_{Kond.}$
und $Q_K$ nach bekannten Gleichungen berechenbar sind, gilt dies
nicht in vergleichbarer Genauigkeit für die spezifischen Enthalpien $h_L$ und $h_V$.

Obgleich für die Berechnung von $h_L$ und $h_V$ Gleichungen zur Verfügung stehen wie die folgenden:

$$h_L = f_1 + f_2 K + (f_3 + f_4 \wp) \times T + (f_5 + f_6 \wp) T^2$$

$$h_V = (f_7 + f_8 \wp + f_9 K) + (f_{10} K - f_{11}) T + f_{12} T^2$$

$\wp$ = Standarddichte

K = Charakterisierungsfaktor

T = Temperatur

$f_1 - f_{12}$ = Konstanten

$$K = \frac{1.216}{d_{15.6}} \sqrt[3]{T_S}$$

so gibt es bisher unterschiedliche Methoden zur Bestimmung der
Dichte $\wp$ der an einem Destillationsboden nach unten abfließenden Flüssigkeit und des nach oben aufsteigenden Dampfes und zur Bestimmung der Dampftemperatur T.

So wird z. B. gemäß oben genannten Stand der Technik (H.L.Wade und C.J. Ryskamp, Hydrocarbon Processing, Nov. 1977, S. 281), die Dichte der internen Flüssigkeitsströme und Wärmeumläufe nach folgender Vorschrift abgeleitet:

$$\rho_L = \frac{m_{SS} + d}{\dfrac{m_{SS}}{\rho_{SS}} + \dfrac{d}{\rho_d}}$$

$\rho$ = Dichte des internen Flüssigkeitsstromes

$m_{SS}$ = Massenstrom, der den Seitenstripper verläßt

$d$ = Dampfmenge, die im Seitenstripper ausgestrippt wurde

$\rho_{SS}$ = Dichte des Massenstroms, der den Seitenstripper verläßt

Die ausgestrippte Dampfmenge d wird durch Bilanzierung der Massen- und Energieströme um den Seitenstripper ermittelt. Das Problem bei dieser Vorgehensweise besteht jedoch darin, daß die Dichte der ausgestrippten Dampfmenge unbekannt ist und geschätzt werden muß, wie die Autoren auch einräumen.

Die Dichte von Wärmekreisläufen soll durch Interpolation der nach dem obigen Verfahren ermittelten Dichten abgeschätzt werden.
Bei den aufsteigenden Dämpfen werden deren Enthalpien nicht aus deren Stoffdaten unmittelbar, sondern aus den Stoffdaten der Produkte und der abfließenden Flüssigkeiten L für die jeweilige Temperatur des Dampfes durch Mischungsrechnung ermittelt.

Aus der Ungenauigkeit und Aufwendigkeit der Methoden des Standes der Technik wird deutlich, daß nach wie vor die Aufgabe besteht, einen besseren Weg zur energiemäßig günstigsten Nutzung einer Destillationskolonne zu finden.

Die vorliegende Erfindung hat diese Aufgabe nunmehr in für den Fachmann überraschender und unvorhersehbarer Weise und Genauigkeit gelöst, durch ein Verfahren zur Energieeinsparung in Destillationskolonnen durch Ermittlung der durch die Destillationsböden aufsteigenden Dampfmengen und der durch die Destillationsböden nach unten abfließenden Flüssigkeitsmengen, insbesondere an den Abzugsböden der Destillationskolonnen, wobei mit der Kenntnis dieser Mengen in an sich bekannter Weise die Energiezufuhr zur Destillationskolonne minimiert wird, dadurch gekennzeichnet, daß die Dichte der an einem Destillationsboden seitlich abgezogenen Flüssigkeit ermittelt wird und aus dieser mit Hilfe von, insbesondere durch Simulationsprogramme ermittelten Funktionen die Dichten der an einem Destillationsboden nach unten abfließenden Flüssigkeit und nach oben aufsteigenden Dämpfe bestimmt werden, und daß die Temperatur des Destillationsbodens ermittelt wird und aus dieser mit Hilfe von, insbesondere durch Simulationsprogramme ermittelten Funktionen die Temperatur der in diesem Destillationsboden aufsteigenden Dämpfe ermittelt wird.

Gemäß vorliegender Erfindung lassen sich demgemäß durch Ermittlung der Dichte der an einem Boden seitlich abgezogenen Flüssigkeit sowohl die Dichte der von einem Boden nach unten abfließenden Flüssigkeit als auch die Dichte des an diesem Boden aufsteigenden Dampfes bestimmen.

Die vorliegende Erfindung zeigt für den Fachmann überraschend, daß sich in unvorhersehbarer einfacher Weise aus der Dichte der seitlich abgezogenen Flüssigkeit die Dichten der durch den betreffenden Boden abfließenden Flüssigkeit bzw. des durch den
Boden aufsteigenden Dämpfe genau und einfach bestimmen lassen.
Ebenso läßt sich die Temperatur des aufsteigenden Dampfes in
einem Boden durch die Messung der Temperatur dieses Bodens
bzw. der darauf befindlichen Flüssigkeit genau und einfach bestimmen. Die technische Lehre der vorliegenden Erfindung beinhaltet daher die Einsparung von Energie in Destillationskolonnen durch Messung der Dichten der an den Böden seitlich abgezogenen Flüssigkeiten (an den Abzugsböden) und durch Messung
der Temperatur der an einem solchen Boden nach unten abfließenden Flüssigkeit und bestimmte Beziehungen zu den Dichten der
Flüssigkeiten und Dämpfe bzw. deren Temperaturen im Kolonneninneren.

Die vorliegende Erfindung gilt für alle Destillationskolonnen,
ist jedoch von besonderer Bedeutung für Rohölkolonnen (Erdöldestillation bei Normaldruck), die mit seitlichen Umläufen und
Seitenstrippern ausgerüstet sind, wobei die Umläufe bekanntlich
dazu dienen, Wärme im Wärmetausch an das eingesetzte Rohöl abzugeben.

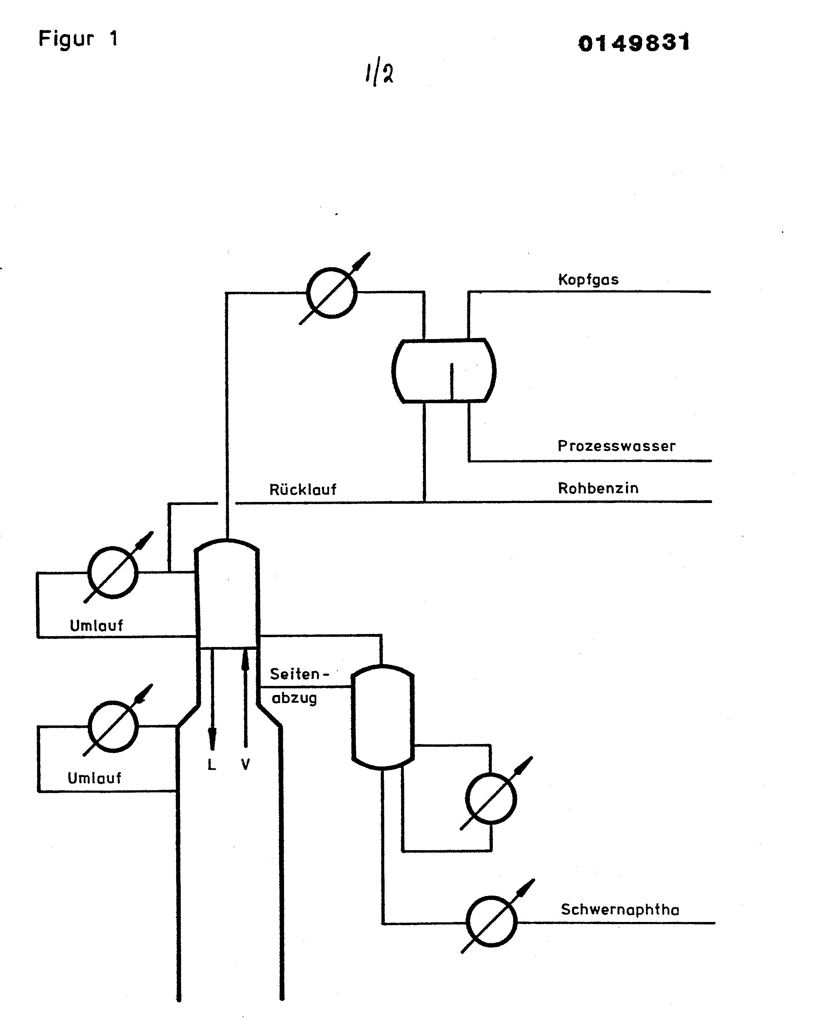

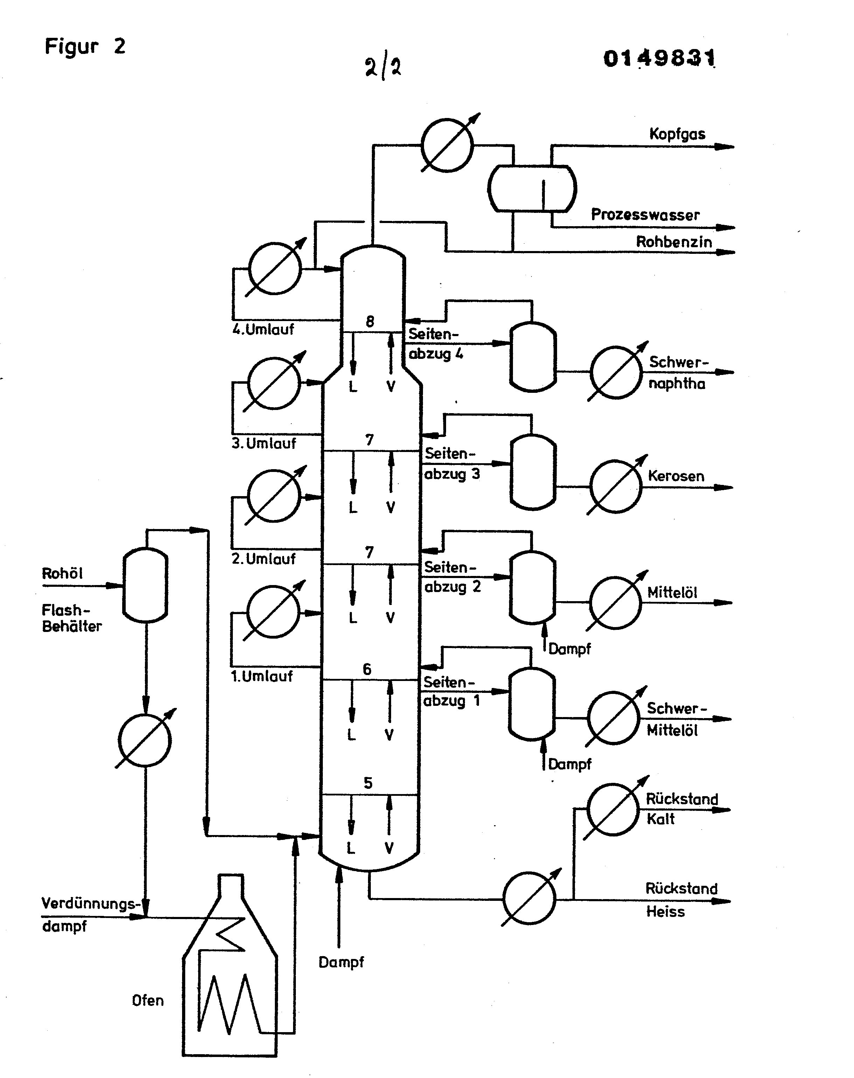

Zur weiteren Erläuterung dienen die Figuren 1 und 2. Figur 1
stellt den obersten Abzugsboden einer Destillationskolonne dar.
Figur 2 stellt eine typische Rohölkolonne dar. Gemäß Figur 1
wird an dem rechts angebrachten obersten Seitenabzug Flüssigprodukt abgezogen, links befindet sich ein seitlicher Umlauf.
Über Kopf geht die Kopffraktion, die Prozeßwasser beigemengt
enthält. In einem Abscheider werden Kopfgas und Wasser sowie
mit über Kopf gegangenes Rohbenzin voneinander getrennt. Auf
der rechten Seite unter dem Destillationsboden wird eine sogenannte Schwernaphthafraktion abgezogen, die einen Stripper
durchfließt. Der seitliche Umlauf ist in nicht näher erläuterter Weise als Wärmetauscher gegen eingesetztes Rohöl ausgebildet. Durch den in Figur 1 dargestellten Destillationsboden fließt nach unten die Flüssigkeitsmenge L, während nach oben
die Dampfmenge V durch den Boden strömt.

Figur 2 stellt eine typische Rohöldestillationskolonne dar, die
4 Seitenabzüge und auf der Höhe dieser Seitenabzüge 4 Umläufe
zum Wärmetausch besitzt. Die Wärmetauscher dienen in nicht
näher gekennzeichneter Weise zur Wärmeübertragung auf Einsatzprodukte. Der Ofen links unten dient zum Aufheizen des Rohöls.
Der links darüber befindliche Flash-Behälter dient zum Abtreiben niedrig siedender Bestandteile im Rohöl.
Gemäß vorliegender Erfindung kann durch Ermittlung der Dichten
1 - 4 an den jeweiligen Seitenabzügen sowie durch Ermittlung
der Temperaturen auf den Böden 5 - 8 jeweils L und V an den
Abzugsböden ermittelt werden und hiernach in an sich bekannter
Weise die unten dem Gesichtspunkt der Energieeinsparung günstigste Fahrweise der Kolonne ermittelt werden.

Aus experimentell insbesondere aber durch Simulationsprogramme
ermittelten Abhängigkeiten zwischen den Dichten der an den Seitenabzügen abgezogenen Flüssigkeiten und den Dichten der Flüssigkeiten bzw. Dämpfe an den Abzugsböden lassen sich Beziehungen ableiten, die z. B. durch folgende Gleichungen ausgedrückt
werden können:

$$\rho_{SS} = K_1 + K_2 \times {}^{O}API$$

$${}^{O}API = \text{Standarddichte } (15,56 \ {}^{O}C, \text{ flüssig})$$

$$SS = \text{am Seitenabzug abgezogenes Produkt}$$

Die erfindungsgemäß ermittelten Gleichungen können jedoch auch
folgende oder andere Formen haben:

$$\rho_{SS} = K_1 \times {}^{O}API - K_2$$

Für die am jeweiligen Abzugsboden aufsteigenden Dämpfe ergeben sich durch die Bestimmung der Temperatur auf dem Boden ähnliche Beziehungen wie z. B.

$$T_V = K_1 + K_2 \times T \ ^\circ C, \text{ flüssig}$$

Bekanntlich ändern sich die Dichten und Temperaturen der Dämpfe und Flüssigkeiten auf den Böden mit der Menge der aufsteigenden Dämpfe bzw. mit dem Rückfluß und damit mit der Energiezufuhr zur Kolonne.

Wie aus den Gleichungen 1, 2 und 3 deutlich wird, können gemäß vorliegender Erfindung die genannten Mengenströme aus den einfach zu bestimmenden Standarddichten der abgezogenen Flüssigkeit sowie den einfach zu bestimmenden Temperaturen der auf den Böden befindlichen Flüssigkeiten und gemäß den erfindungsgemäßen Beziehungen ermittelt werden.

Erfindungsgemäß wird die Overflash-Menge aus der Dichte des abgezogenen Destillationsrückstandes bzw. der Temperatur in der Flashzone ermittelt. Das erfindungsgemäße Verfahren ist auch bei beliebigen anderen Destillationskolonnen anwendbar, sofern die Standarddichten der Destillationsprodukte bekannt sind.

Wesseling, den 18.01.1984
NL-Dr.Hö/Esch    - 2115 -

Unser Zeichen:    - UK 350 -

Verfahren zur Energieeinsparung in
Destillationskolonnen

Patentansprüche:

1. Verfahren zur Energieeinsparung in Destillationskolonnen
durch Ermittlung der durch die Destillationsböden aufsteigenden Dampfmengen und der durch die Destillationsböden
nach unten abfließenden Flüssigkeitsmengen, insbesondere
an den Abzugsböden der Destillationskolonnen, wobei aus
diesen Mengen in an sich bekannter Weise die Energiezufuhr
zur Destillationskolonne minimiert wird, dadurch gekennzeichnet, daß die Dichte der an einem Destillationsboden seitlich abgezogenen Flüssigkeit ermittelt wird und aus dieser
mit Hilfe von Funktionen die Dichten der an einem Destillationsboden nach unten abfließenden Flüssigkeit und nach oben
aufsteigenden Dämpfe bestimmt werden, und daß die Temperatur
des Destillationsbodens ermittelt wird und aus dieser mit
Hilfe von Funktionen die Temperatur der in diesem Destillationsboden aufsteigenden Dämpfe ermittelt wird.

2. Verfahren nach Anspruch 1, dadurch gekennzeichnet, daß die
Dichten der an einem Destillationsboden nach unten abfließenden Flüssigkeit und des nach oben aufsteigenden Dampfes
aus der Dichte der an dem Destillationsboden seitlich abgezogenen Flüssigkeit mit Hilfe von durch Simulationsprogramme ermittelten Funktionen bestimmt werden.

3. Verfahren nach Anspruch 1, dadurch gekennzeichnet, daß die Temperatur des in einem Destillationsboden aufsteigenden Dampfes aus der Temperatur auf diesem Boden mit Hilfe von durch Simulationsprogramme ermittelten Funktionen bestimmt wird.

4. Verfahren nach den Ansprüchen 1 - 3, dadurch gekennzeichnet, daß die Destillationskolonne Seitenabzüge und Wärmeumläufe enthält.

Figur 1

0149831

1/2

Figur 1

Figur 2

2/2

0149831

Kopfgas
Prozesswasser
Rohbenzin

4.Umlauf
8
Seitenabzug 4
L   V
Schwernaphtha

3.Umlauf
7
Seitenabzug 3
L   V
Kerosen

2.Umlauf
7
Seitenabzug 2
L   V
Mittelöl
Dampf

Rohöl
Flash-
Behälter

1.Umlauf
6
Seitenabzug 1
L   V
Schwer-
Mittelöl
Dampf

5
L   V
Rückstand
Kalt

Verdünnungsdampf
Dampf
Rückstand
Heiss

Ofen